# EUROPEAN PATENT SPECIFICATION

(11) **EP 3 506 113 B1**
(45) Date of publication and mention of the grant of the patent: **04.05.2022**
(21) Application number: 17842787.8
(22) Date of filing: 03.08.2017
(51) Int. Cl.: G06F 12/0846, G06F 12/1036, G06N 3/063

(54) **TLB DEVICE SUPPORTING MULTIPLE DATA FLOWS AND UPDATE METHOD FOR TLB MODULE**
TLB-VORRICHTUNG ZUR UNTERSTÜTZUNG MEHRERER DATENSTRÖME UND AKTUALISIERUNGSVERFAHREN FÜR TLB-MODUL
DISPOSITIF TLB PRENANT EN CHARGE DE MULTIPLES FLUX DE DONNÉES ET PROCÉDÉ DE MISE À JOUR POUR MODULE TLB

(30) Priority: 26.08.2016 CN 201610738487
(43) Date of publication of application: 03.07.2019
(73) Proprietor: Cambricon Technologies Corporation Limited, Beijing 100191 (CN)
(72) Inventor: CHEN, Tianshi, Shanghai 201203 (CN); GUO, Qi, Shanghai 201203 (CN); CHEN, Yunji, Shanghai 201203 (CN)
(74) Representative: AWA Sweden AB
(86) International application number: PCT/CN2017/095845
(87) International publication number: WO 2018/036364

(56) References cited:
- WO-A1-2007/073624
- CN-A- 102 662 860
- CN-A- 103 455 443
- CN-A- 104 298 616
- CN-A- 104 346 284
- CN-A- 105 653 790
- US-A- 5 574 877
- US-A1- 2004 073 766
- US-A1- 2012 226 888
- US-B1- 6 205 531

## Description

### FIELD OF THE INVENTION

The present invention relates to the field of artificial intelligence, in particular, to a TLB device supporting multiple data streams and an updating method for a TLB module.

### BACKGROUND OF THE INVENTION

Memory Management Unit (MMU), by mapping logical addresses to physical addresses, may increase the total size of the program's data and stacks to exceed the size of a physical memory. The MMU's page table, e.g., the conversion table of logical address and physical address, is stored in memory. Since the conversion from a logical address to a physical address requires multiple accesses to memory, the performance of data access is greatly reduced, and thus a Translation Lookaside Buffer (TLB) module emerges. The TLB module stores a part of page entries in the page table. When a data processing device sends a logical address, MMU first accesses the TLB module. If the TLB module contains the page which may be used to convert this logical address, e.g., TLB hit, this page is directly used for address conversion. If the TLB module does not contain the page which may be used to convert this logical address, which is called TLB miss, MMU accesses the page table in memory to look up the page of corresponding address conversion for address conversion and update this page into the TLB module. The TLB module may reduce the frequency of accessing the memory, and largely improve the performance of data access particularly in the case where some data are frequently accessed.

For the streaming applications that are similar to artificial neural network, they are characterized by including multiple data streams with consecutive logical addresses and only accessing each data once. For a traditional TLB module, TLB miss may frequently occur as the streaming application data is often accessed once. Every time the TLB miss occurs, the page of corresponding address conversion needs to be searched in the memory and the TLB module needs to be updated. Therefore, for the streaming applications, the traditional TLB module may not improve well the performance of data access. US 6205531 B1 relates to a method and apparatus for virtual address translation.

### OBJECTS AND SUMMARY OF THE INVENTION

In view of this, one purpose of the present invention is to provide a TLB device supporting multiple data streams, and another purpose is to provide an updating method for a TLB module, in order to solve the deficiencies of the traditional TLB module in streaming applications. The invention is defined by the appended claims.

To achieve above purpose, as one aspect of the present invention, the present invention provides a TLB device supporting multiple data streams comprising:
a control unit configured to set *k* TLB modules corresponding to *k* data streams of the streaming application to be processed, each TLB module having a plurality of pages and a plurality of page frames that respectively correspond to the plurality of pages, and complete a conversion from a logical address to a physical address by a mapping relationship between each of the plurality of pages and each of the plurality of page frames, where k is a natural number.

As another aspect of the present invention, the present invention further provides a method for updating a TLB module. The method may include:
setting *k* TLB modules corresponding to *k* data streams of the streaming application to be processed, each TLB module having a plurality of pages and a plurality of page frames that respectively correspond to the plurality of pages; and completing a conversion from a logical address to a physical address by a mapping relationship between each of the plurality of pages and each of the plurality of page frames, where k is a natural number;
when a TLB miss occurs, accessing, by a control unit, a page table in a memory to look up a page related to the conversion of a corresponding address for an address conversion; and updating, by the control unit, the page to the corresponding TLB module to replace a page entry in the TLB page.

As yet another aspect of the present invention, the present invention further provides a method for updating a TLB module. The method may include:
setting *k* TLB modules corresponding to *k* data streams of the streaming application to be processed, each TLB module having a plurality of pages and a plurality of page frames that respectively correspond to the plurality of pages; and completing a conversion from a logical address to a physical address by a mapping relationship between each of the plurality of pages and each of the plurality of page frames, where k is a natural number;
every time a TLB miss occurs, accessing, by the control unit, a page table in a memory to look up a page related to the conversion of a corresponding address for an address conversion; and replacing, by the control unit, all page entries in the TLB module with the page and consecutive page entries after the page.

As yet another aspect of the present invention, the present invention further provides a method for updating a TLB module. The method includes:
setting *k* TLB modules corresponding to *k* data streams of the stream application to be processed, each TLB module having a plurality of pages and a plurality of page frames that respectively correspond to the plurality of pages; and completing a conversion from a logical address to a physical address by a mapping relationship between each of the plurality of pages and each of the plurality of page frames, where k is a natural number, the page entries stored in the TLB module in the k TLB modules are consecutive page entries, which, in other words, means that the logical addresses represented by the stored page entries are consecutive; assuming that the page entries stored by a current TLB are 〈P₁,F₁〉,〈P₂,F₂〉,〈P₃,F₃〉,...,〈P*ₙ*,F*ₙ*〉 , where (P,F) represents a mapping relationship between a page number and a page frame number, in which P represents the page number, F represents the page frame number, and page numbers P,P₂,P₃,...,P*ₙ* have consecutive logical address ranges;
after a TLB hit occurs every time, replacing the page that completes the address translation, e.g., 〈P₁,F₁〉, where the replaced page is a next consecutive page entry of consecutive page entries stored in the current TLB, e.g., 〈P_{*n*+1},F_{*n*+1}〉, and the page entries stored by TLB after the replacement are 〈P_{*n*+1},F_{*n*+1}〉,〈P₂,F₂〉,〈P₃,F₃〉,...,〈P*ₙ*,F*ₙ*〉, which are still consecutive page entries.

Based on the above technical solution, the device and method of the present invention may have the following beneficial effects. As different TLB modules correspond to different data streams, each TLB module may store page entries having consecutive logical addresses, which is beneficial for subsequent update operations. The updating method for TLB module that a TLB module adopted with consecutive logical addresses is used due to the features of streaming application may greatly reduce the occurrence of TLB miss. In other words, the updating method for TLB module may reduce the search of page table in memory by MMU and greatly improve the performance of data access.

### BRIEF DESCRIPTION OF FIGURES

Fig. 1 is an example block view of overall flow for the device according to an embodiment of the present invention;
Fig. 2 is an example block view of the structure of page table in MMU, according to an embodiment of the present invention;
Fig. 3 is a representation method of the logical address, according to an embodiment of the present invention;
Fig. 4 to 6 are example block views of the updating method for TLB module, according to an embodiment of the present invention;

### DETAILED DESCRIPTION OF THE EMBODIMENTS

To make the objectives, technical schemes and advantages of the present invention more apparent, the present invention will be described in more detail in conjunction with specific embodiments and with reference to the drawings and examples above. Other aspects, advantages, and salient features of the invention will become apparent to those skilled in the art through the following detailed description.

In the present specification, the following various embodiments for describing the principles of the present invention are merely illustrative and should not be construed in any way as limiting the scope of the invention. The following description with reference to the accompanying drawings is provided to assist in a comprehensive understanding of exemplary embodiments of the invention as defined by the claims. The following description includes various specific details to assist in that understanding but these details are to be regarded as merely exemplary. Accordingly, those of ordinary skill in the art will recognize that various changes and modifications of the embodiments described herein may be made without departing from the invention. In addition, descriptions of well-known functions and constructions are omitted for clarity and conciseness. Moreover, like reference numerals are used for like functions and operations throughout the drawings.

The present invention discloses a TLB device supporting multiple data streams comprising:
a control unit configured to set *k* TLB modules corresponding to *k* data streams of the streaming application to be processed, each TLB module having a plurality of pages and a plurality of page frames that respectively correspond to the plurality of pages, and complete a conversion from a logical address to a physical address by a mapping relationship between each of the plurality of pages and each of the plurality of page frames, where k is a natural number.

The logical address transmitted from a data processing device to the control unit may further include a stream ID in addition to a page number and an offset. The number of bits occupied by the stream ID is ^{┌}log₂*k*^{┐}*,* in which k represents the number of TLBs and ┌ ┐ represents a rounding up operation.

For the artificial neural network, the control unit is provided with four TLB modules respectively corresponding to four data streams including weights, inputs, outputs, and partial sums.

The present invention further discloses several methods for updating TLB module, including:
setting *k* TLB modules corresponding to *k* data streams of the stream application to be processed, each TLB module having a plurality of pages and a plurality of page frames that respectively correspond to the plurality of pages; and completing a conversion from a logical address to a physical address by a mapping relationship between each of the plurality of pages and each of the plurality of page frames, where k is a natural number.

Method 1 may further include:
when a TLB miss occurs, accessing, by a control unit, a page table in a memory to look up a page related to the conversion of corresponding address for an address conversion; and updating, by the control unit, the page to the corresponding TLB module to replace a page entry in the TLB page.

Alternatively, replacing the page entry employs a random replacement algorithm or an LRU algorithm.

Method 2 may further include:
every time a TLB miss occurs, accessing, by the control unit, a page table in the memory to look up a page related to the conversion of corresponding address for an address conversion; and replacing, by the control unit, all page entries in the TLB module with the page and consecutive page entries after the page.

Methods 3 may further include:
setting the page entries stored in the TLB module in the k TLB modules to consecutive page entries, which, in other words, means that the logical addresses represented by the stored page entries are consecutive; assuming that page entries stored by a current TLB are 〈P₁,F₁〉,〈P₂,F₂〉,〈P₃,F₃〉,...,〈P*ₙ*,F*ₙ*〉, where (P,F) represents a mapping relationship between a page number and a page frame number, in which P represents the page number, F represents the page frame number, and page numbers P₁,P₂,P₃,...,P*ₙ* have consecutive logical address ranges ;
after a TLB hit occurs every time, replacing the page that completes the address translation, e.g., 〈P₁,F₁〉 , where the replaced page is a next consecutive page entry of consecutive page entries stored in the current TLB, e.g., 〈P_{*n*+1},F_{*n*+1}〉, and the page entries stored by TLB after the replacement are 〈P_{*n*+1},F_{*n*+1}〉,〈P₂,F₂〉,〈P₃,F₃〉,...,〈P*ₙ*,F*ₙ*〉, which are still consecutive page entries.

The technical solution of the invention is further explained below through specific embodiments.

### Embodiment 1

The TLB device supporting multiple data streams according to the present invention is used for related applications of artificial neural network. For artificial neural networks, there are generally four data streams such as weights, inputs, outputs, and partial sums. In unclaimed embodiments, other different data streams may also be set according to actual application requirements.

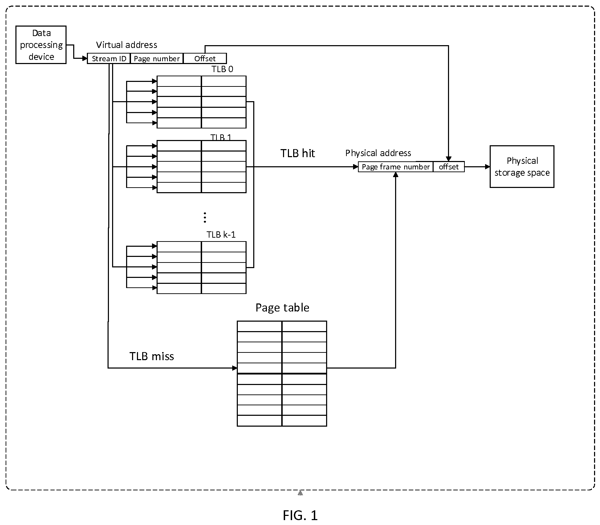

Fig. 1 is an example block view of overall flow for the device according to an embodiment of the present invention. Data streams in artificial neural networks generally include weights, inputs, outputs, and partial sums. Therefore, the TLB modules in the example block view are set to four TLB modules, and each TLB module corresponds to one data stream. When the data processing device passes in a logical address, the corresponding TLB is selected to look up, according to the stream ID portion in the logical address, whether there is a page entry corresponding to the logical address. If there is a corresponding page entry, a TLB hit is determined and the address conversion is completed. If the TLB needs to be updated, an update operation is performed. If there is no corresponding page entry, a TLB miss is determined. The corresponding page entry is looked up in the page table of the memory, and an update operation is performed on the TLB at the same time.

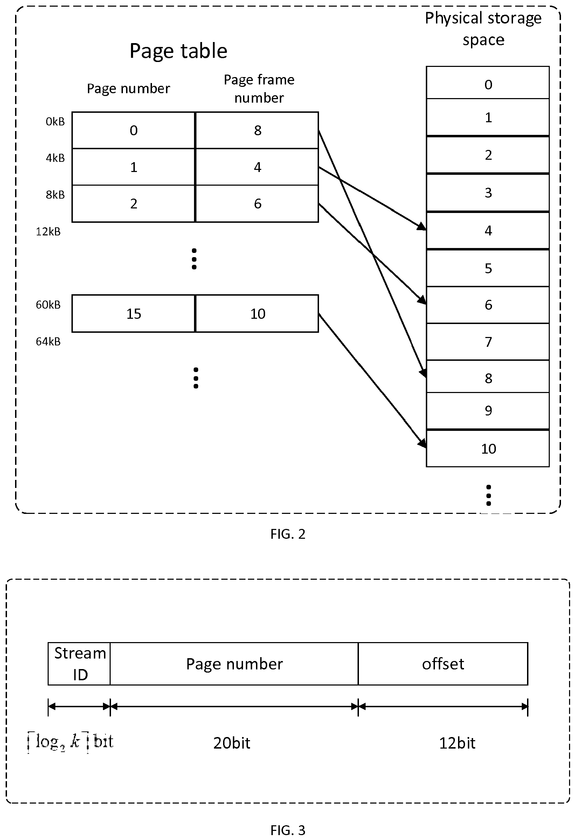

Fig. 2 is an example block view of the structure of the page table (TLB module structure) in MMU, according to an embodiment of the present invention. The logical address is divided into a series of equally sized sections through paged storage management, which is called a page and each page is numbered in sequence. The page in the example block diagram may have a size of 4kB or another size according to the specific requirements. Each page uses a number to represent a page size of 4kB, but it does not mean that the page occupies space of 4kB, for example, page number 0 represents a logical address range of 0-4kB. The physical memory is also divided into consecutive parts of the same size, called frames, and each frame is numbered. The page table stores a mapping relationship between the page number and the page frame number. For example, if the range corresponding to the logical address 8640 is [8k, 16k], the corresponding page number is 2. The page number is mapped as a physical address range corresponding to 6 according to the mapping relationship in the example block diagram, and the final physical address converted from the logical address is then determined according to the offset address. The page entries stored in each TLB in FIG. 1 are parts of the page entries in the page table, and the number of TLB storage page entries is determined by the size of the TLB storage space.

Fig. 3 is a representation method of the logical address, according to an embodiment of the present invention. The method for representing the logical address of the present invention, relative to traditional logical address representation methods, is added with some bits to represent the stream ID, which is used for mapping the data stream and the corresponding TLB module. Only desired parts are shown in the example view. Four data streams are included in the artificial neural network. ^{┌}log₂ 4^{┐}=2, therefore the stream ID has only 2 bits to distinguish the four data streams. Since the page size set in FIG. 2 is 4 kB, ^{┌}log₂ 4*k*^{┐}=12, therefore, among the 32-bit logical addresses, 20 bits correspond to the page number and 12 bits correspond to the offset address. According to the correspondence between the page number and the page frame number, the first 20 bits corresponding to the physical address may be obtained. The last 12 bits corresponding to the physical address are the same as the last 12 bits corresponding to logical address

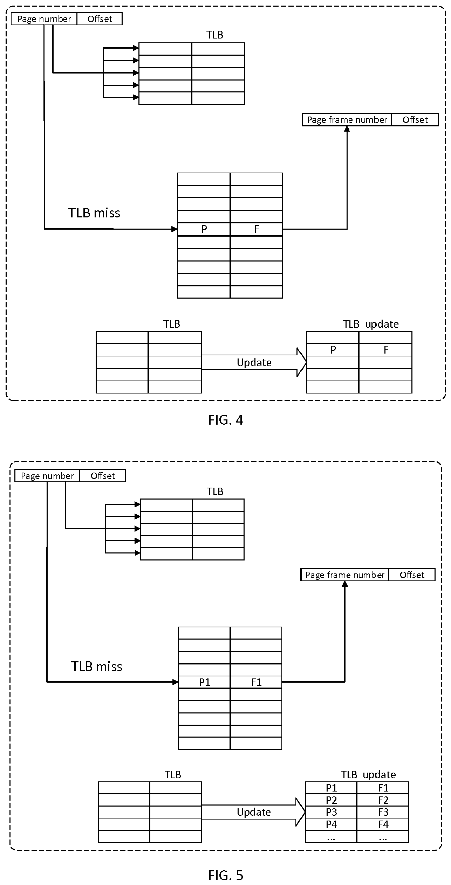

Figs. 4 to 6 are example block views of the updating method for TLB page, according to an embodiment of the present invention. The example block view shows only one updating method for one TLB. Any one of the updating methods or combination of several updating methods may be used for any TLB of the device.

Fig. 4 is a first updating method for TLB page according to an embodiment of the present invention. The first updating method 1 is the same as the traditional TLB page updating method: when a TLB miss occurs, MMU accesses a page table in the memory to look up a page related to the conversion of corresponding address for an address conversion and updates the page to the TLB module to replace a page entry in the TLB page. Replacement of page entries here may employ different replacement algorithms, such as random replacement algorithms, LRU algorithms, and the like. The random replacement algorithm determines the TLB page entries to be replaced according to the random number generated by the data processing device; the LRU algorithm selects and replaces the page entries according to the time length from the access time to the current time, and the page entry having the longest time length from the last access time to the current time is used as the replaced page entry.

Fig. 5 is a second updating method for TLB page according to an embodiment of the present invention. The second updating method utilizes the characteristics of the streaming application that the data stream logical addresses are continuous and each data is accessed only once. The updating method includes: every time a TLB miss occurs, MMU accesses a page table in the memory to look up a page related to the conversion of corresponding address for an address conversion and replaces all page entries in the TLB with the page and consecutive page entries after the page. P, P1, P2, P3 ... in the figure are consecutive page entries.

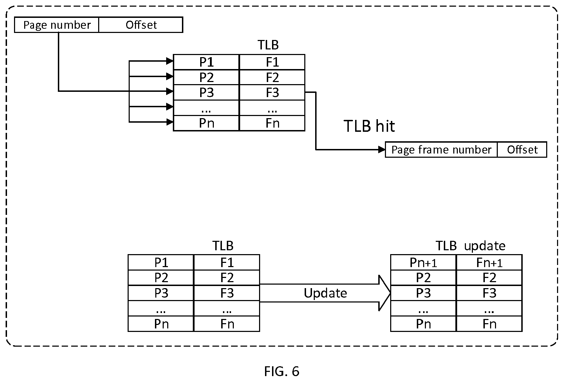

Fig. 6 is a third updating method for TLB page according to an embodiment of the present invention. The third updating method also utilizes the characteristics of the streaming application. The premise of updating is that the page entries stored in the TLB module are consecutive page entries. In other words, the logical addresses represented by the stored page entries are consecutive. Assume that the page entries stored by current TLB are 〈P₁,F₁〉,〈P₂,F₂〉,〈P₃,F₃〉,...,〈P*ₙ*,F*ₙ*〉, where (P,F) represents the mapping relationship between the page number and the page frame number, in which P represents the page number, F represents the page frame number, and the logical address ranges corresponding to the page number P₁,P₂,P₃,...,F*ₙ* are consecutive. Every time after the TLB hit occurs, the page that completes the address translation is replaced, e.g., 〈P₁,F₁〉 is replaced; the replaced page is the next consecutive page entry of the consecutive page entries stored in the current TLB, e.g., 〈P_{*n*+1},F_{*n*+1}〉; the page entries stored by TLB after the replacement are 〈P_{*n*+1},F_{*n*+1}〉,〈P₂,F₂〉,〈P₃,F₃〉,...,〈P*ₙ*,F*ₙ*〉, which are still consecutive page entries. This updating method is similar to the sliding mechanism for sliding window.

### Embodiment 2

The TLB device supporting multiple data streams according to an embodiment of the present invention may be used for related steaming applications such as machine learning, e.g. natural speech processing, handwriting recognition, face recognition and other related applications. It is assumed that there are *k* data in this embodiment. The size of *k* depends on the requirements of different applications.

Fig. 1 is an example block view of overall flow for the device according to an embodiment of the present invention. For streaming applications with k data streams, the TLB modules in the example block view may be set to k TLB modules, and each TLB module corresponds to one data stream. When the data processing device passes in a logical address, the corresponding TLB is selected to look up, according to the stream ID portion in the logical address, whether there is a page entry corresponding to the logical address. If there is a corresponding page item, the TLB hit is determined and the address conversion is completed, and if the TLB needs to be updated, an update operation is performed. If there is no corresponding page entry, a TLB miss is determined. The corresponding page entry is looked up in the page table of the memory, and an update operation is performed on the TLB at the same time.

Fig. 2 is an example block view of the structure of page table in MMU, according to an embodiment of the present invention. The logical address is divided into a series of equally sized sections, which are called pages, through paged storage management, and each page is numbered in sequence. The page in the example block diagram may have a size of 4kB or another size according to the specific requirements. Each page uses a number to represent a page size of 4kB, but it does not mean that the page occupies space of 4kB, for example, page number 0 represents a logical address range of 0-4kB. The physical memory is also divided into consecutive parts of the same size, called frames, and each frame is numbered. The page table stores a mapping relationship between the page number and the page frame number. For example, if the range corresponding to the logical address 8640 is [8k, 16k], the corresponding page number is 2. The page number is mapped as a physical address range corresponding to 6 according to the mapping relationship in the example block diagram, and the final physical address converted from the logical address is then determined according to the offset address. The page entries stored in each TLB in FIG. 1 are parts of the page entries in the page table, and the number of TLB storage page entries is determined by the size of the TLB storage space.

Fig. 3 is a representation method of the logical address, according to an embodiment of the present invention. The method for representing the logical address of the present invention, relative to traditional logical address representation methods, is added with some bits to represent the stream ID, which is used for mapping the data stream and the corresponding TLB module. Only desired parts are shown in the example view. *k* data streams are included in the artificial neural network, therefore the stream ID has only ^{┌}log₂*k*^{┐}*bit* to distinguish the *k* data streams. Since the page size set in FIG. 2 is 4 kB, ^{┌}log₂4*k*^{┐}=12, therefore, among the 32-bit logical addresses, 20 bits correspond to the page number and 12 bits correspond to the offset address. According to the correspondence between the page number and the page frame number, the first 20 bits corresponding to the physical address may be obtained. The last 12 bits corresponding to the physical address are the same as the last 12 bits corresponding to logical address

Figs. 4 to 6 are example block views of the updating method for TLB page, according to an embodiment of the present invention. The example block view shows only one updating method for one TLB. Any one of the updating methods or combination of several updating methods may be used for any TLB of the device.

Fig. 4 is a first updating method for TLB page according to an embodiment of the present invention. The first updating method is the same as the traditional TLB page updating method: when a TLB miss occurs, MMU accesses a page table in the memory to look up a page related to the conversion of corresponding address for an address conversion and updates the page to the TLB module to replace a page entry in the TLB page. Replacement of page entries here may employ different replacement algorithms, such as random replacement algorithms, LRU algorithms, and the like. The random replacement algorithm determines the TLB page entries to be replaced according to the random number generated by the data processing device; the LRU algorithm selects and replaces the page entries according to the time length from the access time to the current time, and the page entry having the longest time length from the last access time to the current time is used as the replaced page entry.

Fig. 5 is a second updating method for TLB page according to an embodiment of the present invention. The second updating method utilizes the characteristics of the streaming application that the data stream logical addresses are continuous and each data is accessed only once. The updating method includes: every time when a TLB miss occurs, MMU accesses a page table in the memory to look up a page related to the conversion of corresponding address for an address conversion and replaces all page entries in the TLB with the page and consecutive page entries after the page. P, P1, P2, P3 ... in the figure are consecutive page entries.

Fig. 6 is a third updating method for TLB page according to an embodiment of the present invention. The third updating method also utilizes the characteristics of the streaming application. The premise of updating is that the page entries stored in the TLB module are consecutive page entries. In other words, the logical addresses represented by the stored page entries are consecutive. Assume that the page entries stored by current TLB are 〈P₁,F₁〉,〈P₂,F₂〉,〈P₃,F₃〉,...,(P*ₙ*,F*ₙ*〉, where 〈P,F〉 represents the mapping relationship between the page number and the page frame number, in which P represents the page number, F represents the page frame number, and the logical address ranges corresponding to the page number P₁,P₂, P₃,...,P*ₙ* are consecutive. Every time when the TLB hit occurs, the page that completes the address translation is replaced, e.g., 〈P₁,F₁〉 is replaced; the replaced page is the next consecutive page entry of the consecutive page entries stored in the current TLB, e.g., 〈P_{*n*+1},F_{*n*+1}〉 ; the page entries stored by TLB after the replacement are 〈P_{*n*+1},F_{*n*+1}〉,〈P₂,F₂〉,〈P₃,F₃〉,...,〈P*ₙ*,F*ₙ*〉, which are still consecutive page entries. This updating method is similar to the sliding mechanism for sliding window.

In an unclaimed embodiment, for a streaming application similar to the artificial neural network, since it has the characteristics of multiple data streams with consecutive logical addresses, each TLB may store page entries with consecutive logical addresses by using multiple TLB modules. For TLB with logically-consecutive page entries, occurrence of TLB miss may be greatly reduced by using the updating method for TLB page, thereby greatly reducing the times for looking up in page table and improving the performance of data access.

## Claims

1. A TLB, Translation Lookaside Buffer, device supporting multiple data streams, comprising:
a control unit configured to set k TLB modules (TLBO, TLB1, ..., TLBk-1), corresponding to k data streams of a streaming application to be processed, each TLB module (TLBO, TLB1, ..., TLBk-1) having a plurality of page numbers and a plurality of page frame numbers that respectively correspond to the plurality of page numbers, and
to complete a conversion from a logical address transmitted from a data processing device to the control unit to a physical address by a mapping relationship between each of the plurality of page numbers and each of the plurality of page frame numbers; wherein k is a natural number;
wherein a stream ID is configured for mapping the k data streams and the k TLB modules;
**characterized in that**
the logical address includes the stream ID in addition to the page number and an offset; and **in that**
the control unit is provided with four TLB modules respectively corresponding to four data streams including weights, inputs, outputs, and partial sums of an artificial neural network, respectively.

2. The TLB device of claim 1, wherein a number of bits occupied by the stream ID is ^{┌}log₂*k*^{┐}, wherein *k* represents a number of TLB and ┌ ┐ represents a rounding up operation.

3. The TLB device according to any of claims 1-2, wherein the control unit is configured to:
when a TLB miss occurs, access a page table in a memory to look up a page related to the conversion of a corresponding address for an address conversion; and
update the page to the corresponding TLB module to replace a page entry in the TLB page.

4. The TLB device according to claim 3, wherein replacing the page entry employs a random replacement algorithm or an LRU algorithm.

5. The TLB device according to any of claims 1-2, wherein the control unit is configured to:
every time a TLB miss occurs, access a page table in the memory to look up a page related to the conversion of a corresponding address for an address conversion; and
replace all page entries in the TLB module with the page and consecutive page entries after the page.

6. The TLB device according to any of claims 1-5,
wherein the page entries stored in the TLB module in the k TLB modules (TLBO, TLB1, ..., TLBk-1) are consecutive page entries, which, in other words, means that the logical addresses represented by the stored page entries are continuous; wherein
assuming that the page entries stored by a current TLB are 〈P₁,F₁〉,〈P₂,F₂〉,..., 〈P*ₙ*,F*ₙ*〉, <P, F> represents a mapping relationship between a page number and a page frame number, P represents the page number, F represents the page frame number, and the logical address ranges corresponding to the page numbers P₁,P₂,P₃, ...,P*ₙ* are continuous; and
wherein the control unit is configured to:
after a TLB hit occurs every time, replace the page that completes the address translation, e.g.,, 〈P₁,F₁〉, wherein the replaced page is a next consecutive page entry of consecutive page entries stored in the current TLB, e.g., 〈P_{*n*+1},F_{*n*+1}〉 , and the page entries stored by TLB after the replacement are 〈P_{*n*+1},F_{*n*+1}〉,〈P₂F₂〉,〈P₃,F₃〉,...,〈P*ₙ*,F*ₙ*〉, which are still consecutive page entries.

7. A method of supporting multiple data streams, implemented by a TLB device comprising a control unit, the method comprising:
setting k TLB modules (TLBO, TLB1, ..., TLBk-1), corresponding to k data streams of a streaming application to be processed, by the control unit, each TLB module (TLBO, TLB1, ..., TLBk-1) having a plurality of page numbers and a plurality of page frame numbers that respectively correspond to the plurality of page numbers, and
completing a conversion from a logical address transmitted from a data processing device to the control unit to a physical address by a mapping relationship between each of the plurality of page numbers and each of the plurality of page frame numbers; wherein k is a natural number;
wherein a stream ID is used for mapping the k data streams and the k TLB modules;
**characterized in that**
the logical address includes the stream ID in addition to the page number and an offset; and **in that**
the control unit is provided with four TLB modules respectively corresponding to four data streams including weights, inputs, outputs, and partial sums of an artificial neural network, respectively.

8. The method according to claim 7,
wherein a number of bits occupied by the stream ID is ^{┌}log₂ *k*^{┐}, wherein k represents a number of TLB and ┌ ┐represents a rounding up operation.

9. The method according to any of claims 7-8, comprising:
when a TLB miss occurs, accessing, by the control unit, a page table in a memory to look up a page related to the conversion of a corresponding address for an address conversion; and updating, by the control unit, the page to the corresponding TLB module to replace a page entry in the TLB page.

10. The method according to claim 9, comprising replacing the page entry employs a random replacement algorithm or an LRU algorithm.

11. The method according to any of claims 7-8, comprising:
every time a TLB miss occurs, accessing, by the control unit, a page table in the memory to look up a page related to the conversion of a corresponding address for an address conversion; and replacing, by the control unit, all page entries in the TLB module with the page and consecutive page entries after the page.

12. The method according to any of claims 7-11, wherein
the page entries stored in the TLB module in the k TLB modules (TLBO, TLB1, ..., TLBk-1) are consecutive page entries, which, in other words, means that the logical addresses represented by the stored page entries are continuous;
wherein
assuming that the page entries stored by a current TLB are 〈P₁,F₁〉,〈P₂,F₂〉,〈P₃,F₃〉,..., 〈P*ₙ*,F*ₙ*〉, <P, F> represents a mapping relationship between a page number and a page frame number, P represents the page number, F represents the page frame number, and the logical address ranges corresponding to the page numbers P₁,P₂,P₃,...,P*ₙ* are continuous;
wherein the method further comprises:
after a TLB hit occurs every time, replacing the page that completes the address translation, e.g.,, 〈P₁,F₁〉, wherein the replaced page is a next consecutive page entry of consecutive page entries stored in the current TLB, e.g., 〈P_{*n*+1}F_{*n*+1}〉 , and the page entries stored by TLB after the replacement are 〈P_{*n*+1,}F_{*n*+1}〉,〈P₂,F₂〉,〈P₃,F₃〉,..., 〈P*ₙ*,F*ₙ*〉, which are still consecutive page entries.

## Patentansprüche

1. TLB (Translation Lookaside Buffer)-Vorrichtung, die mehrere Daten-Streams unterstützt und die umfasst:
eine Steuereinheit, die dafür konfiguriert ist, k TLB-Module (TLBO, TLB1, ..., TLBk-1) einzustellen, die k Daten-Streams einer zu verarbeitenden Streaming-Anwendung entsprechen, wobei jedes TLB-Modul (TLBO, TLB1, ..., TLBk-1) mehrere Seitennummern und mehrere Seitenrahmennummern, die jeweils den mehreren Seitennummern entsprechen, aufweist, und
dafür konfiguriert ist, eine Umwandlung von einer logischen Adresse, die von einer Datenverarbeitungsvorrichtung zu der Steuereinheit übertragen wird, in eine physische Adresse durch eine Abbildungsbeziehung zwischen jeder der mehreren Seitennummern und jeder der mehreren Seitenrahmennummern zu vollenden;
wobei k eine natürliche Zahl ist;
wobei eine Stream-ID zum Abbilden der k Daten-Streams und der k TLB-Module konfiguriert ist;
**dadurch gekennzeichnet, dass**
die logische Adresse zusätzlich zu der Seitennummer und einem Versatz auch die Stream-ID enthält; und dadurch, dass
die Steuereinheit mit vier TLB-Modulen ausgestattet ist, die jeweils vier Daten-Streams entsprechen, die Gewichte, Eingaben, Ausgaben und
Teilsummen eines künstlichen neuronalen Netzes enthalten.

2. TLB-Vorrichtung nach Anspruch 1,
wobei eine Anzahl von Bits, die durch die Stream-ID belegt werden, ^{┌}*log*₂*k*^{┐} ist,
wobei k eine Anzahl von TLB darstellt und ┌ ┐ eine Aufrundungsoperation darstellt.

3. TLB-Vorrichtung nach einem der Ansprüche 1 und 2,
wobei die Steuereinheit dafür konfiguriert ist:
wenn ein TLB-Fehlzugriff erfolgt, auf eine Seitentabelle in einem Speicher zuzugreifen, um eine Seite bezüglich der Umwandlung einer entsprechenden Adresse für eine Adressumwandlung nachzuschlagen; und
die Seite auf das entsprechende TLB-Modul zu aktualisieren, um einen Seiteneintrag in der TLB-Seite zu ersetzen.

4. TLB-Vorrichtung nach Anspruch 3,
wobei für das Ersetzen des Seiteneintrags ein Zufallsersetzungsalgorithmus oder ein LRU-Algorithmus verwendet wird.

5. TLB-Vorrichtung nach einem der Ansprüche 1 und 2,
wobei die Steuereinheit dafür konfiguriert ist:
jedes Mal, wenn ein TLB-Fehlzugriff erfolgt, auf eine Seitentabelle in dem Speicher zuzugreifen, um eine Seite bezüglich einer Umwandlung einer entsprechenden Adresse für eine Adressumwandlung nachzuschlagen; und
alle Seiteneinträge in dem TLB-Modul durch die Seite und nachfolgende Seiteneinträge nach der Seite zu ersetzen.

6. TLB-Vorrichtung nach einem der Ansprüche 1 und 5,
wobei die in dem TLB-Modul gespeicherten Seiteneinträge in den k TLB-Modulen (TLBO, TLB1, ..., TLBk-1) aufeinanderfolgende Seiteneinträge sind, was - mit anderen Worten - bedeutet, dass die durch die gespeicherten Seiteneinträge dargestellten logischen Adressen fortlaufend sind;
wobei angenommen wird, dass die durch einen momentanen TLB gespeicherten Seiteneinträge 〈P₁,F₁〉, 〈P₂,F₂〉, 〈P₃,F₃〉, ..., 〈Pₙ,Fₙ〉 sind,
wobei <P,F> eine Abbildungsbeziehung zwischen einer Seitennummer und einer Seitenrahmennummer darstellt, P die Seitennummer darstellt, F die Seitenrahmennummer darstellt, und die logischen Adressbereiche, die den Seitennummern P₁,P₂,P₃,...,Pₙ entsprechen, fortlaufend sind; und
wobei die Steuereinheit dafür konfiguriert ist:
jedes Mal nach einem TLB-Zugriffserfolg die Seite zu ersetzen, die die Adressübersetzung vollendet, zum Beispiel 〈P₁,F₁〉,
wobei die ersetzte Seite ein nächstfolgender Seiteneintrag von aufeinanderfolgenden Seiteneinträgen ist, die in dem momentanen TLB gespeichert sind, zum Beispiel (Pₙ₊₁,Fₙ₊₁), und die durch den TLB nach der Ersetzung gespeicherten Seiteneinträge 〈Pₙ₊₁,Fₙ₊₁〉, 〈P₂,F₂〉, 〈P₃,F₃〉, ..., 〈Pₙ,Fₙ〉 sind, die immer noch aufeinanderfolgende Seiteneinträge sind.

7. Verfahren zum Unterstützen mehrerer Daten-Streams, das durch eine TLB-Vorrichtung implementiert wird, die eine Steuereinheit umfasst, wobei das Verfahren umfasst:
Einstellen von k TLB-Modulen (TLBO, TLB1, ..., TLBk-1), die k Daten-Streams einer zu verarbeitenden Streaming-Anwendung entsprechen, durch die Steuereinheit, wobei jedes TLB-Modul (TLBO, TLB1, ..., TLBk-1) mehrere Seitennummern und mehrere Seitenrahmennummern, die jeweils den mehreren Seitennummern entsprechen, aufweist, und
Vollenden einer Umwandlung von einer logischen Adresse, die von einer Datenverarbeitungsvorrichtung zu der Steuereinheit übertragen wird, in eine physische Adresse durch eine Abbildungsbeziehung zwischen jeder der mehreren Seitennummern und jeder der mehreren Seitenrahmennummern;
wobei k eine natürliche Zahl ist;
wobei eine Stream-ID zum Abbilden der k Daten-Streams und der k TLB-Module verwendet wird;
**dadurch gekennzeichnet, dass**
die logische Adresse zusätzlich zu der Seitennummer und einem Versatz auch die Stream-ID enthält; und dadurch, dass
die Steuereinheit mit vier TLB-Modulen ausgestattet ist, die jeweils vier Daten-Streams entsprechen, die Gewichte, Eingaben, Ausgaben und Teilsummen eines künstlichen neuronalen Netzes enthalten.

8. Verfahren nach Anspruch 7,
wobei eine Anzahl von Bits, die durch die Stream-ID belegt werden, ^{┌}*log*₂*k*^{┐} ist,
wobei k eine Anzahl von TLB darstellt und ┌ ┐ eine Aufrundungsoperation darstellt.

9. Verfahren nach einem der Ansprüche 7 und 8, das umfasst:
wenn ein TLB-Fehlzugriff erfolgt, Zugreifen, durch die Steuereinheit, auf eine Seitentabelle in einem Speicher, um eine Seite bezüglich der Umwandlung einer entsprechenden Adresse für eine Adressumwandlung nachzuschlagen; und
Aktualisieren, durch die Steuereinheit, der Seite in dem entsprechenden TLB-Modul, um einen Seiteneintrag in der TLB-Seite zu ersetzen.

10. Verfahren nach Anspruch 9, das umfasst, dass für das Ersetzen des Seiteneintrags ein Zufallsersetzungsalgorithmus oder ein LRU-Algorithmus verwendet wird.

11. Verfahren nach einem der Ansprüche 7 und 8, das umfasst:
jedes Mal, wenn ein TLB-Fehlzugriff erfolgt, Zugreifen, durch die Steuereinheit, auf eine Seitentabelle in dem Speicher, um eine Seite bezüglich der Umwandlung einer entsprechenden Adresse für eine Adressumwandlung nachzuschlagen; und
Ersetzen, durch die Steuereinheit, aller Seiteneinträge in dem TLB-Modul durch die Seite und nachfolgende Seiteneinträge nach der Seite.

12. Verfahren nach einem der Ansprüche 7-11,
wobei die in dem TLB-Modul gespeicherten Seiteneinträge in den k TLB-Modulen (TLBO, TLB1, ..., TLBk-1) aufeinanderfolgende Seiteneinträge sind, was - mit anderen Worten - bedeutet, dass die durch die gespeicherten Seiteneinträge dargestellten logischen Adressen fortlaufend sind;
wobei angenommen wird, dass die durch einen momentanen TLB gespeicherten Seiteneinträge 〈P₁,F₁〉, 〈P₂,F₂〉, 〈P₃,F₃〉, ..., 〈Pₙ,Fₙ〉 sind,
wobei <P,F> eine Abbildungsbeziehung zwischen einer Seitennummer und einer Seitenrahmennummer darstellt, P die Seitennummer darstellt, F die Seitenrahmennummer darstellt, und die logischen Adressbereiche, die den Seitennummern P₁,P₂,P₃,...,Pₙ entsprechen, fortlaufend sind;
wobei das Verfahren des Weiteren umfasst:
jedes Mal nach einem TLB-Zugriffserfolg die Seite zu ersetzen, die die Adressübersetzung vollendet, zum Beispiel 〈P₁,F₁〉,
wobei die ersetzte Seite ein nächstfolgender Seiteneintrag von aufeinanderfolgenden Seiteneinträgen ist, die in dem momentanen TLB gespeichert sind, zum Beispiel (Pₙ₊₁,Fₙ₊₁), und die durch den TLB nach der Ersetzung gespeicherten Seiteneinträge 〈Pₙ₊₁, Fₙ₊₁〉, 〈P₂,F₂〉, 〈P₃,F₃〉, ..., 〈Pₙ,Fₙ〉 sind, die immer noch aufeinanderfolgende Seiteneinträge sind.

## Revendications

1. Dispositif répertoire de pages actives, TLB, prenant en charge de multiples flux de données, comprenant :
une unité de commande configurée pour régler k modules TLB (TLBO, TLB1, ..., TLBk-1), correspondant à k flux de données d'une application de streaming à traiter, chaque module TLB (TLBO, TLB1, ..., TLBk-1) comportant une pluralité de numéros de pages et une pluralité de numéros de trames de pages qui correspondent respectivement à la pluralité de numéros de pages, et pour réaliser une conversion d'une adresse logique transmise depuis un dispositif de traitement de données à l'unité de commande en une adresse physique par une relation de mappage entre chacun de la pluralité de numéros de pages et chacun de la pluralité de numéros de trames de pages ;
dans lequel k est un nombre naturel ;
dans lequel un ID de flux est configuré pour le mappage des k flux de données et des k modules TLB ;
**caractérisé en ce que**
l'adresse logique inclut l'ID de flux en plus du numéro de page et d'un décalage ; et **en ce que**
l'unité de commande est pourvue de quatre modules TLB correspondant respectivement à quatre flux de données incluant respectivement des poids, des entrées, des sorties et des sommes partielles d'un réseau neuronal artificiel.

2. Dispositif TLB selon la revendication 1, dans lequel un nombre de bits occupés par l'ID de flux est ^{┌}*log*₂*k*^{┐}, dans lequel k représente un nombre de TLB et ┌ ┐ représente une opération d'arrondissement à la valeur supérieure.

3. Dispositif TLB selon la revendication 1 ou 2, dans lequel l'unité de commande est configurée pour :
lorsqu'un échec TLB survient, accéder à une table de pages dans une mémoire pour consulter une page liée à la conversion d'une adresse correspondante pour une conversion d'adresse ; et
mettre à jour la page au module TLB correspondant pour remplacer une entrée de page dans la page TLB.

4. Dispositif TLB selon la revendication 3, dans lequel le remplacement de l'entrée de page emploie un algorithme de remplacement aléatoire ou un algorithme LRU.

5. Dispositif TLB selon la revendication 1 ou 2, dans lequel l'unité de commande est configurée pour :
chaque fois qu'un échec TLB survient, accéder à une table de pages dans la mémoire pour consulter une page liée à la conversion d'une adresse correspondante pour une conversion d'adresse ; et
remplacer toutes les entrées de page dans le module TLB par la page et des entrées de pages consécutives après la page.

6. Dispositif TLB selon l'une quelconque des revendications 1 à 5,
dans lequel les entrées de pages stockées dans le module TLB parmi les k modules TLB (TLBO, TLB1, ..., TLBk-1) sont des entrées de pages consécutives, ce qui signifie en d'autres termes que les adresses logiques représentées par les entrées de pages stockées sont continues ;
dans lequel, en supposant que les entrées de pages stockées par un TLB courant sont 〈*P*₁,*F*₁〉, 〈*P*₂*,F*₂〉*,* 〈*P*₃*,F*₃〉*,* ..., 〈*Pₙ,Fₙ*〉*,* 〈*P,F*〉 représente une relation de mappage entre un numéro de page et un numéro de trame de page, P représente le numéro de page, F représente le numéro de trame de page, et les plages d'adresses logiques correspondant aux numéros de pages P₁, P₂, P₃, ..., Pₙ sont continues ; et
dans lequel l'unité de commande est configurée pour :
après qu'un succès TLB survient chaque fois, remplacer la page qui réalise la conversion d'adresse, par exemple 〈*P*₁,*F*₁〉, dans lequel la page remplacée est une entrée de page consécutive suivante parmi des entrées de pages consécutives stockées dans le TLB courant, par exemple 〈*P*_{*n*+1}*,F*_{*n*+1}〉*,* et les entrées de pages stockées par TLB après le remplacement sont 〈*P*_{*n*+1}*,F*_{*n*+1}〉, 〈*P*₂*,F*₂〉*,* 〈*P*₃*,F*₃〉*,* ..., 〈*Pₙ,Fₙ*〉*,* qui sont toujours des entrées de pages consécutives.

7. Procédé de prise en charge de multiples flux de données, mis en œuvre par un dispositif TLB comprenant une unité de commande, le procédé comprenant :
le réglage de k modules TLB (TLBO, TLB1, ..., TLBk-1), correspondant à k flux de données d'une application de streaming à traiter, par l'unité de commande, chaque module TLB (TLBO, TLB1, ..., TLBk-1) comportant une pluralité de numéros de pages et une pluralité de numéros de trames de pages qui correspondent respectivement à la pluralité de numéros de pages, et
la réalisation d'une conversion d'une adresse logique transmise depuis un dispositif de traitement de données à l'unité de commande en une adresse physique par une relation de mappage entre chacun de la pluralité de numéros de pages et chacun de la pluralité de numéros de trames de pages ;
dans lequel k est un nombre naturel ;
dans lequel un ID de flux est utilisé pour le mappage des k flux de données et des k modules TLB ;
**caractérisé en ce que**
l'adresse logique inclut l'ID de flux en plus du numéro de page et d'un décalage ; et **en ce que**
l'unité de commande est pourvue de quatre modules TLB correspondant respectivement à quatre flux de données incluant respectivement des poids, des entrées, des sorties et des sommes partielles d'un réseau neuronal artificiel.

8. Procédé selon la revendication 7,
dans lequel un nombre de bits occupés par l'ID de flux est ^{┌}*log*₂*k*^{┐}, dans lequel k représente un nombre de TLB et ┌ ┐ représente une opération d'arrondissement à la valeur supérieure.

9. Procédé selon la revendication 7 ou 8, comprenant :
lorsqu'un échec TLB survient, l'accès, par l'unité de commande, à une table de pages dans une mémoire pour consulter une page liée à la conversion d'une adresse correspondante pour une conversion d'adresse ; et
la mise à jour, par l'unité de commande, de la page au module TLB correspondant pour remplacer une entrée de page dans la page TLB.

10. Procédé selon la revendication 9, comprenant le remplacement de l'entrée de page par l'emploi d'un algorithme de remplacement aléatoire ou d'un algorithme LRU.

11. Procédé selon la revendication 7 ou 8, comprenant :
chaque fois qu'un échec TLB survient, l'accès, par l'unité de commande, à une table de pages dans la mémoire pour consulter une page liée à la conversion d'une adresse correspondante pour une conversion d'adresse ; et
le remplacement, par l'unité de commande, de toutes les entrées de page dans le module TLB par la page et des entrées de pages consécutives après la page.

12. Procédé selon l'une quelconque des revendications 7 à 11, dans lequel
les entrées de pages stockées dans le module TLB parmi les k modules TLB (TLBO, TLB1, ..., TLBk-1) sont des entrées de pages consécutives, ce qui signifie en d'autres termes que les adresses logiques représentées par les entrées de pages stockées sont continues ;
dans lequel, en supposant que les entrées de pages stockées par un TLB courant sont 〈*P*₁,*F*₁〉, 〈*P*₂*,F*₂〉*,* 〈*P*₃*,F*₃〉*,* ..., 〈*Pₙ,Fₙ*〉*,* 〈*P,F*〉 représente une relation de mappage entre un numéro de page et un numéro de trame de page, P représente le numéro de page, F représente le numéro de trame de page, et les plages d'adresses logiques correspondant aux numéros de pages P₁, P₂, P₃, ..., Pₙ sont continues ;
dans lequel le procédé comprend en outre :
après qu'un succès TLB survient chaque fois, le remplacement de la page qui réalise la conversion d'adresse, par exemple 〈*P*₁,*F*₁〉, dans lequel la page remplacée est une entrée de page consécutive suivante parmi des entrées de pages consécutives stockées dans le TLB courant, par exemple 〈*P*_{*n*+1}*,F*_{*n*+1}〉, et les entrées de pages stockées par TLB après le remplacement sont 〈*P*_{*n*+1}*,F*_{*n*+1}〉, 〈*P*₂*,F*₂〉*,* 〈*P*₃,*F*₃〉*,* ..., 〈*Pₙ,Fₙ*〉*,* qui sont toujours des entrées de pages consécutives.
